# EUROPEAN PATENT SPECIFICATION

(11) **EP 0 703 766 B1**
(45) Date of publication and mention of the grant of the patent: **18.06.1997**
(21) Application number: 94915809.1
(22) Date of filing: 15.04.1994
(51) Int. Cl.: A61G 3/02, B60P 1/44

(54) **VEHICLE LIFTS**
FAHRZEUGHEBEBÜHNEN
DISPOSITIF DE LEVAGE UTILISE AVEC UN VEHICULE

(30) Priority: 26.05.1993 US 67724
(43) Date of publication of application: 03.04.1996
(73) Proprietor: RICON CORPORATION, Pacoima, CA 91331 (US)
(72) Inventor: FRETWELL, Percy, Lancashire BL8 1XF (GB); SAUCIER, Stanton, D., Tarzana, CA 91356 (US); DOUCET, Bernard, G., Woodland Hills, CA 91367 (US)
(74) Representative: Coles, Graham Frederick
(86) International application number: US9404184
(87) International publication number: WO9427546

(56) References cited:
- WO-A-90/05072
- US-A- 4 134 504

## Description

This invention relates to lifts that are of the kind which is adapted to be affixed to a vehicle for movement of a load between raised and lowered positions and which comprises: a platform structure for receiving the load to be moved between the raised and lowered positions; a carriage structure pivotally coupled to said platform structure to accommodate a range of pivotal motion by said platform structure which extends between said raised and lowered positions and which embraces a stowage position; a mounting enclosure adapted to be affixed to said vehicle and defining a space to receive at least part of said carriage structure for stowage and with said platform structure in said stowage position; motive means for driving said platform structure in said pivotal range of motion; and control apparatus for said motive means.

Vehicle lifts of this above-specified kind are especially useful where handicapped passengers in wheelchairs are to be loaded onto, and unloaded from, a vehicle. A vehicle lift of this kind and applicable in the loading and unloading of wheelchairs is known from WO-A-90/05072, and involves a platform structure that is stowed together with its carriage structure beneath the vehicle when the lift is not in use. A motor drive is operative to draw the carriage structure, and with it the platform structure, under the vehicle into the stowed condition. However, unless the platform structure is properly and accurately aligned with the carriage structure when this motor drive is operated, there is the danger that the platform structure may become jammed, and damage to the lift may result.

It is an object of the present invention to provide a vehicle lift of the above-specified kind that includes provision for avoiding the above-mentioned danger.

According to the present invention, a vehicle lift of the above-specified kind is characterised in that said control apparatus includes a sensor unit which detects when the platform structure is in said stowage position and which is operative during select intervals to actuate said motive means to locate the platform structure in said stowage position.

With the vehicle lift in accordance with the invention there is the advantage that the platform structure is driven into the stowage position in accordance with operation of the sensor unit so that misalignment of the platform structure that might lead to damage in stowing the carriage and platform structures, is avoided to a significant extent.

A form of vehicle lift for wheelchairs is described in US-A-4134504 in which the platform structure is driven between raised and lowered positions in accordance with manual control. Under such control the platform structure can be lowered into a stowage position from which it can then be retracted under the floor of the vehicle. However, there is no sensor unit as provided in the vehicle lift of the present invention, for detecting when the platform structure is in the stowage position and operative to locate it there.

The sensor unit of the lift according to the present invention may include switch means mounted for actuation by movement of the platform structure, and in addition to detecting when the platform structure is in the stowage position may also detect when it is in said raised and said lowered positions. Furthermore, said control apparatus may include manual means for actuation to drive the platform structure within its range of pivotal motion to said stowage position. Other features of the present invention are as set out in subordinate Claims 4 to 20 hereto.

### BRIEF DESCRIPTION OF THE DRAWINGS

Recognizing that the invention may be variously embodied, by way of example, a specific embodiment along with some modifications is described herein with reference to the accompanying drawings, in which:
FIGURE 1 is a simplified side elevation view of a vehicle incorporating a lift in accordance herewith and showing the lift in various operating positions;
FIGURE 2 is a detailed perspective view showing the lift of FIGURE 1 aligned for stowage;
FIGURE 3 is an enlarged partially cut-away and fragmentary perspective view of a portion of the lift as illustrated in FIGURE 2;
FIGURE 4 is another enlarged partially cut-away and fragmentary perspective view of a portion of the lift as shown in FIGURE 2;
FIGURE 5 is a vertical sectional view taken along the line 5-5 of FIGURE 3;
FIGURE 6 is a side elevation view similar to FIGURE 1 depicting an alternative embodiment;
FIGURE 7 is a side elevation view similar to FIGURE 1 illustrating another alternative embodiment;
FIGURE 8 is an enlarged fragmentary perspective view of a powered mechanism for operating the roll stop of FIGURE 1 showing the roll stop in the ramp position;
FIGURE 9 is a vertical sectional view of the mechanism of FIGURE 8 showing the roll stop in the vertical safety stop position;
FIGURE 10 is an enlarged fragmentary perspective of an emergency release device to disconnect the powered mechanism as showing in FIGURE 8 to permit manual operation;
FIGURE 11 is an enlarged fragmentary perspective view of the roll stop latch mechanism;
FIGURE 12 is an enlarged fragmentary cut-away view of FIGURE 11;
FIGURE 13 is a horizontal sectional view taken along line 13-13 of FIGURE 2 showing a switch actuating cam position when the platform is at stowing level;
FIGURE 14 is a sectional view similar to FIGURE 13 showing a switch actuating cam position when platform is at vehicle floor level;
FIGURE 15 is a sectional view similar to FIGURE 13 showing a switch actuating cam position when platform is at ground level; and
FIGURE 16 is an electromechanical diagram of the drive system of the disclosed embodiment.

### DETAILED DESCRIPTION OF DISCLOSED EMBODIMENT

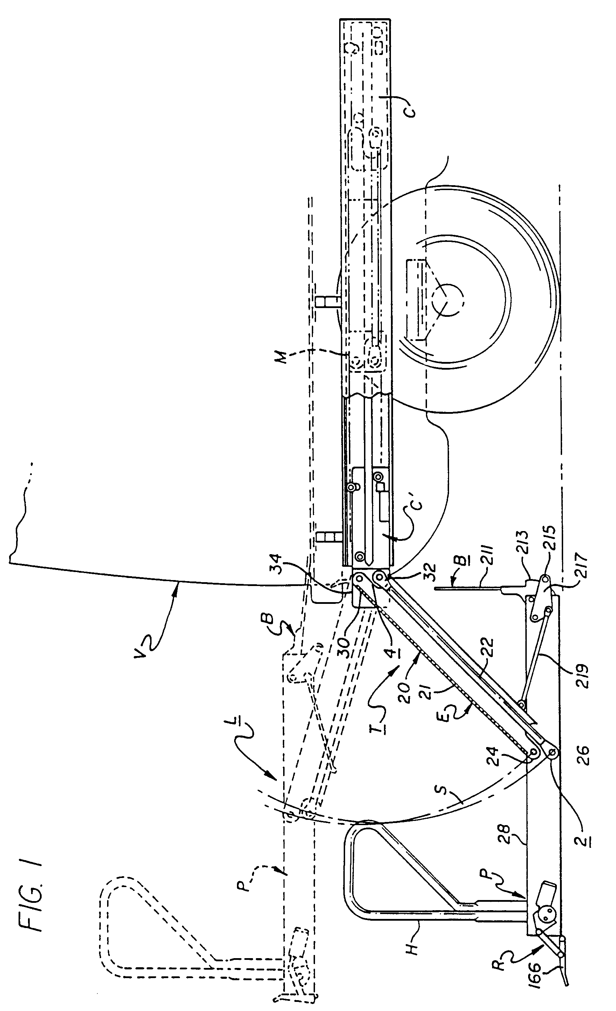

In FIGURE 1, a van type vehicle V is illustrated with a lift L mounted at the rear beneath the traditional access doors (not shown). Only the primary components of the lift L are shown in FIGURE 1 with principal moving components being illustrated in different terminal positions, some of which are designated in dashed lines.

Generally, the lift L incorporates a platform P (lower left) shown in solid lines at ground level, for example, to receive or offload a wheelchair (not shown). The platform P is pivotally connected to an elevating frame E which is in turn pivotally connected to a carriage C. With the carriage C supported by the mounting enclosure M, the elevating frame E may be actuated to swing the platform P in an arcuate path S from the position shown in solid lines to a raised position indicated in dashed lines. From the raised position, approximating the floor level of the vehicle V, a wheelchair can be rolled into and out of the vehicle V.

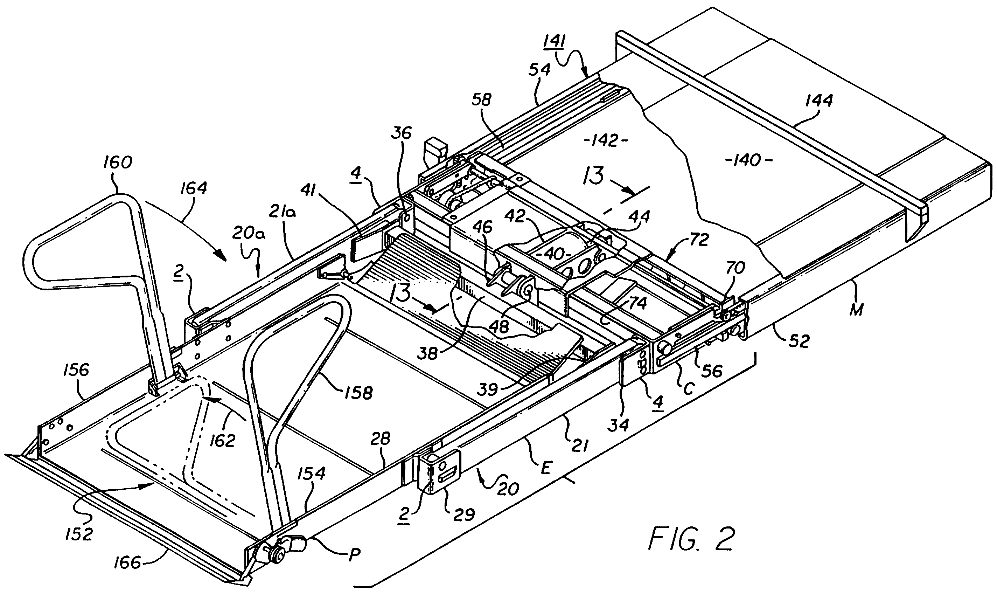

The platform P, along with the elevating frame E and the carriage C is moveable horizontally as a travelling assembly T (FIGURE 2) with respect to the vehicle V to be deployed for use or stowed in a mounting enclosure M. That is, from an intermediate aligned position in the arcuate path S of the platform P, the travelling assembly T moves horizontally into a stowage position. In FIGURE 1, to illustrate the stowage or stowed position, the carriage C is shown in its operating position in solid lines as carriage C' with the mounting enclosure M cut away. The carriage C also is shown in dashed lines as it is positioned when the travelling assembly T is fully stowed.

Summarizing, the platform P (FIGURE 1) moves in the arcuate path S to embrace three terminal positions, i.e., ground level (lowered), vehicle floor level (raised) and stowage level (intermediate). From the stowage level, the aligned platform P, along with the elevating frame E and the carriage C, moves as the composite travelling assembly T (FIGURE 2) horizontally between an outboard deployed position and an inboard stowed position.

Considering FIGURES 1 and 2 somewhat concurrently, the elevating frame E extends between lateral outboard pivot locations 2 (sides of the platform P) and inboard pivot locations 4 on the carriage C. As part of the elevating frame E, two similar such laterally opposed parallelogram arrangements 20 and 20a (FIGURE 2) are pivotally connected at opposite sides of the platform P.

As illustrated in FIGURE 1, the parallelogram arrangements 20 and 20a each comprise upper and lower parallel elements. Consider the parallelogram arrangement 20 as exemplary. One parallel element, in the form of an elongate open channel 21 houses the other parallel elongate rod 22 (FIGURE 1). The outboard ends 24 and 26 of the channel 21 and rod 22 are pivotally affixed to a lateral riser 28 (FIGURE 2) of the platform P by a yoke 29. Somewhat similarly, the inboard ends 30 and 32 (FIGURE 1) of the channel 21 and the rod 22 are connected to the carriage C by a yoke 34 (FIGURE 2). Note that the parallelogram arrangement 20a (FIGURE 2) at the opposite side of the platform P is a mirror image of the parallelogram arrangement 20.

The operation and structure of the parallelogram arrangements 20 and 20a are similar. In that regard, it is to be noted that the channel 21 (FIGURE 2, arrangement 20) encloses the rod 22 on three sides throughout the complete path S of motion. Thus, as a safety feature, no gaps exist between these elongate swinging elements that otherwise might present a hazard.

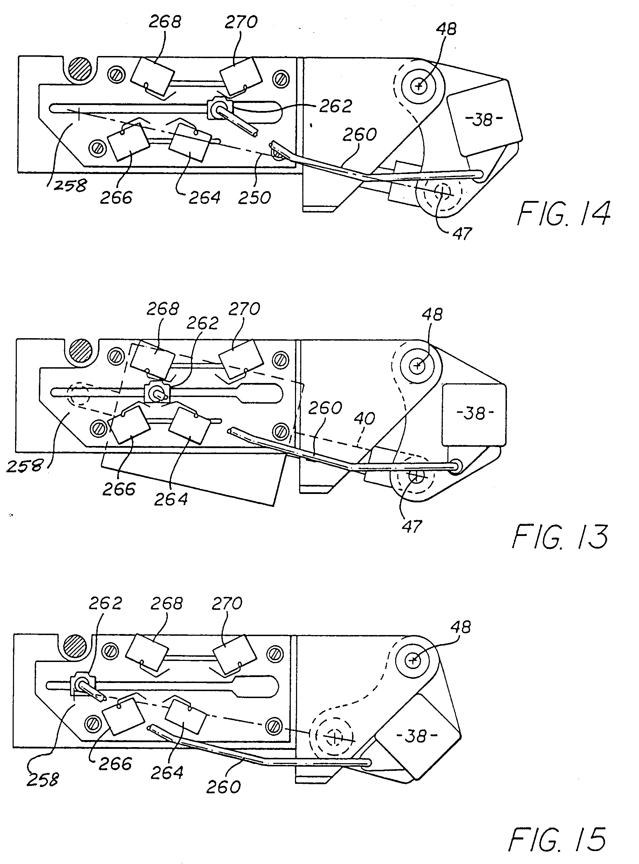

To pivotally actuate the elevating frame E, for lowering and raising the platform P, a cross bar 38 (FIGURE 2) extends transversely, offset from the aligned pivot locations 4. The bar 38 is rigidly affixed between the channels 21 and 21a by foundation supports 39 and 41 respectively. One end of a hydraulic piston-cylinder ram 40 (FIGURE 2) is pivotally anchored centrally between support plates 42 and 44. The other end of the piston cylinder ram 40 is pivotally anchored to the bar 38 by means of the bracket 46 at pivot point 47 (FIGURE 13) which is offset from the pivot point 48. When powered, the ram 40 actuates at pivot point 47 to drive the parallelogram arrangements 20 and 20a (ends 30, FIGURE 1) to raise the elevating frame E in the arcuate path S while the platform P is preserved substantially horizontal.

The lifting and lowering operations are considered below in substantial detail, however, at this point it will be apparent that the arcuate path S (FIGURE 1) of the platform embraces lowered, raised and stowage positions for the platform P. Generally, with the platform P in the lowered position (solid lines, FIGURE 1) the roll stop R has been actuated to the ramp position to provide a smooth transition surface, as for loading a wheelchair. With a wheelchair on the platform P, the elevating frame E raises the platform P to the floor level of the vehicle V (dashed lines, FIGURE 1). As the platform P reaches vehicle floor level, the bridge plate B lowers automatically and the wheelchair may be rolled into the vehicle V. Thereafter, the platform P is lowered to the stowage position of the aligned travelling assembly T (FIGURE 2).

As indicated above, in the arcuate path S of the platform P, a stowage position exists intermediate the raised and lowered positions Essentially, in the stowage position (FIGURE 2) the platform P is horizontally aligned with the elevating frame E, the carriage C and the mounting enclosure M as illustrated in FIGURE 2, allowing the platform P and the elevating frame E to travel in and out of the mounting enclosure M by means of carriage C. Essentially, the travelling assembly T moves somewhat horizontally between a stowed position within the van V (see carriage C, dashed lines, FIGURE 1) and an outboard deployed position with only the carriage C remaining within the van V. As disclosed herein, the movement of the travelling assembly T between the stowed and deployed positions is powered, which operation will be considered along with the related mechanisms.

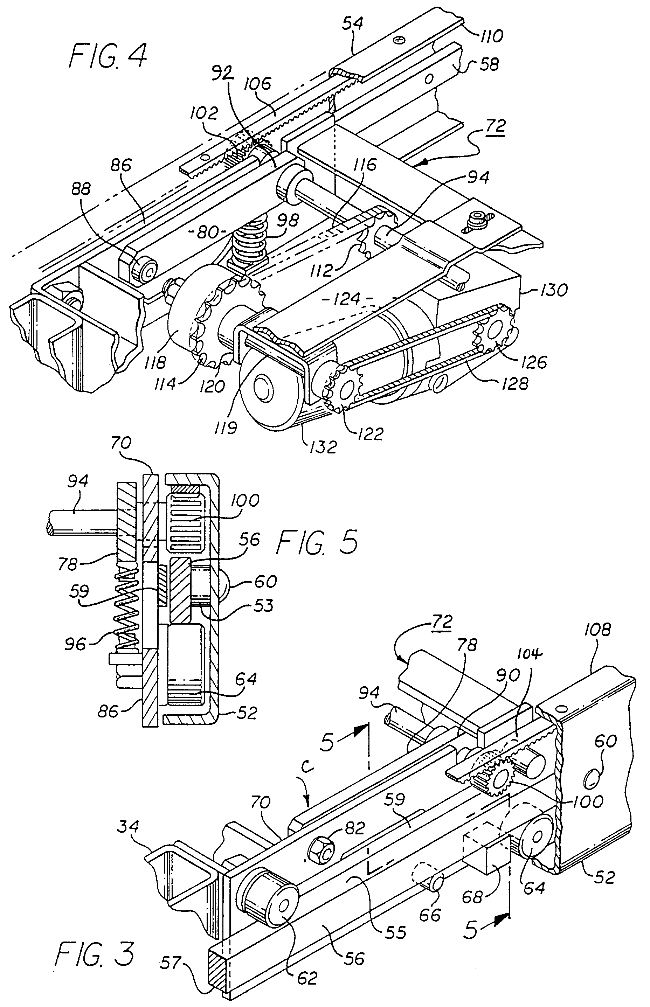

As indicated above, the platform P (FIGURE 2) along with the elevating frame E and the carriage C move as the travelling assembly T into the mounting enclosure M. Specifically, a pair of open, facing opposed horizontal channels 52 and 54 (FIGURE 2) are affixed to the vehicle V and mount the elongate aligned guide rails 56 and 58 respectively as also shown in FIGURE 3. That is, FIGURE 3 shows the (cut-away) channel 52 supported by the vehicle V open to face the opposed channel 54. As the channels 52 and 54 are similar (mirror images) only the channel 52 and associated structure will be described in detail as representative.

The bar or rail 56 is of rectangular cross section to define upper and lower rail surfaces 55 and 57 and is centrally affixed in the channel 52 coextensive therewith. Various fastening techniques may be employed; however, as illustrated in FIGURE 5, the guide rail or bar 56 is affixed to the channel 52 by threaded studs 60 tapped into the rail 56. Consequently, the channel 52 and the bar 56 are rigid affording a linear bearing track to support the carriage C by means of cam followers. The studs 60 pass through standoff bushes 53 laterally spacing the guide rail 56 from the channel 52. Also, a nylon spacer guide 59 is affixed to the side plate 70 (FIGURE 3) of the carriage C. The objective of this structure or attachment is to avoid the accumulation of foreign matter that may otherwise build up and interfere with the smooth motion of the cam followers 62 and 64 on surfaces 55 and 57.

Further in relation to the structure as shown in FIGURE 3, a stop block 68 is attached to the side plate 70 of the carriage C, along with a switch operating plunger 66. These elements mate with another angled stop block (not shown) attached to the channel 52 when the travelling assembly is in the deployed position. The plunger 66 is integrated with the electrical system (described below) as the primary control for the up-and-down movement of the platform P.

The side plate 70 (FIGURE 3) of the frame 72 also carries an internally mounted arm 78 pivotally supported to swing vertically on a bearing fitted to a bolt 82. A similar arm 80 (FIGURE 4) is mounted to side plate 86 by means of bearing on bolt 88. Mounted between the free swinging ends 90 and 92 (FIGURES 3 and 4) of the arms 78 and 80 respectively, is a deployment drive shaft 94 shown fragmentarily in both FIGURES 3 and 4. The shaft 94 is journaled to extend through the ends 90 and 92 of the arms 78 and 80 respectively. The vertically moveable ends 90 and 92 of the arms 78 and 80 are urged upwardly by a pair of coil springs 96 (FIGURE 5) and 98 (FIGURE 4). Thus, the shaft 94 is positioned to couple the carriage C for horizontal movement.

The shaft 94 extends outwardly from the arms 78 and 80 (FIGURES 3 and 4) passing through the plates 70 and 86 to support a pair of pinion gears 100 and 102 respectively. Fixed in the mounting enclosure channels 52 and 54, a pair of gear racks 104 and 106 engage the pinion gears 100 and 102 respectively. As illustrated in FIGURES 3 and 4, the racks 104 and 106 respectively are affixed inside the top webs 108 and 110 of the channels 52 and 54. Accordingly, as the shaft 94 is revolved, the pinion gears 100 and 102 engage the racks 104 and 106 to move the carriage C (FIGURE 1) forwards and backwards within the mounting enclosure M.

Considering the power drive for the shaft 94, a sprocket 112 (FIGURE 4) fixed concentrically on the shaft 94 is coupled to a sprocket 114 by a loop chain 116. The sprocket 114 is mechanically integrated with a ball-detent torque limit clutch 118 concentrically mounted with the sprocket 114 on a shaft 119. A yoke 120 supports the shaft 119 for rotation carrying the clutch 118 on one end and a sprocket 122 on the other. The yoke 120 is affixed, as by welding to an adjustable horizontal support bracket 124 mounted on the frame 72.

Considering the power drive further, the sprocket 122 is driven by a sprocket 126 through a chain 128. The sprocket 126 is mounted on a gear box 130 integrally supported with a motor 132. Thus, through the drive chains 128 and 116, the bidirectional motor 132 actuates the rotary shaft 94 to turn the pinions 100 and 102. Accordingly, engaging the racks 104 and 106, the pinions 100 and 102 move the travelling assembly T (FIGURE 2) inward or outward with respect to the vehicle V (FIGURE 1).

As indicated above, in stowage, the travelling assembly T is well contained in the mounting enclosure M. Essentially, the mounting enclosure M (FIGURE 2) comprises a closed box 141 defined by the laterally spaced side channels 52 and 54, a top cover 140 (FIGURE 2) and a vented bottom 142. Laterally extending brackets, as bracket 144, are bolted to the outer faces of channels 52 and 54 and are attached, as by bolting to the vehicle V. Thus, the mounting enclosure M effectively provides a means of attaching the lift assembly L to vehicle V as well as stowage space with the opposed guide rails 56 and 58 (FIGURE 2) supportably engaging the carriage C. In that regard, the mechanism is void of traps for dirt or debris that otherwise might accumulate to foul the operation.

As another consideration relating to the disclosed lift L, is that, in association with the mounting enclosure M, the carriage C, the elevating frame E and the platform P essentially are modular units to facilitate relatively easy replacement. That is, in the event of a component failure, one of the modular units can be replaced thereby rapidly returning a vehicle to service. In that regard, the connection points are readily apparent.

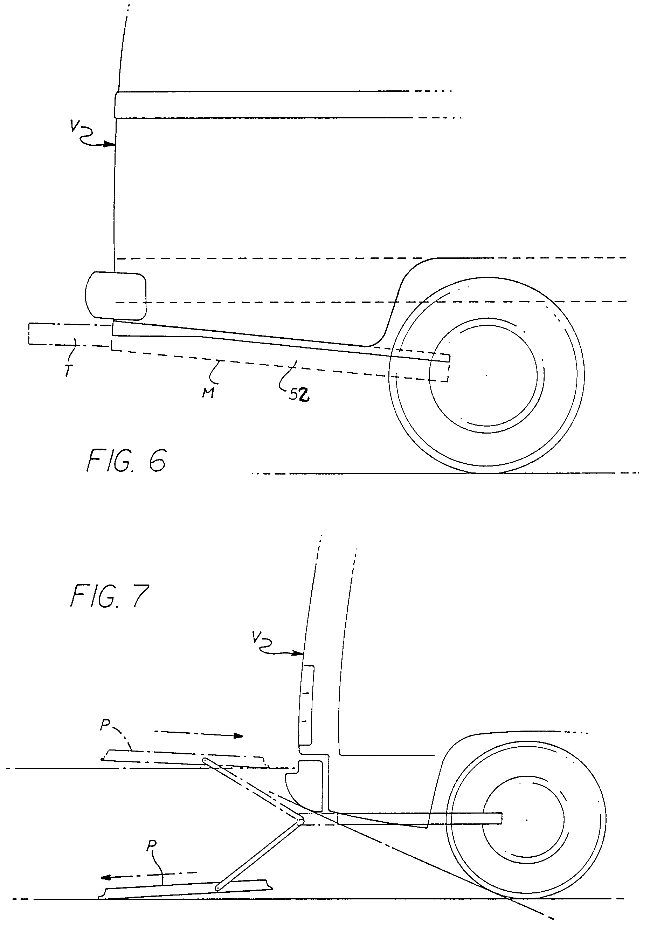

If there is sufficient space beneath the vehicle, the mounting enclosure M can be horizontally mounted by means of channels 52 and 54 as described above. However, in some instances, the vehicle configuration may prevent such an arrangement. To accommodate an alternative mounting arrangement, the mounting enclosure M may be attached to vehicle V with an accommodating angle of departure as shown in FIGURE 6. Essentially, the channels 52 and 54 (FIGURE 2) can be mounted on the vehicle incorporating an angle as shown in FIGURE 6, so as to be inclined upwards as they extend outward or rearward thereby placing the inner ends beneath components of the vehicle V. Essentially, when stowing the travelling assembly T, it follows the contour of a pair of angled guide rails 56 and 58 when moving into the mounting enclosure M.

As another alternative, the parallelogram arrangements (FIGURE 1) of the elevating frame E can be modified to accomplish horizontal offsets by the platform P at different levels (FIGURE 7). Specifically, the parallelogram arrangement 20 (FIGURE 1) can be modified so that the separation between the pivot points at outboard ends 24 and 26 is slightly greater (i.e., 2 mm.) than the separation between the pivot points at the inboard ends 30 and 32. An unequal parallelogram is the result. Consequently, when the lift is in the lowered position (FIGURE 7), the platform P inclines slightly downward as it extends outward. Conversely, when the platform P is elevated, it is inclined slightly upward as it extends outward. Accordingly, a safety feature is provided tilting the platform in a direction to accommodate the natural gravitational wheelchair motion depending upon whether the platform is raised or lowered.

Considering the structure of the platform P (FIGURE 2) in somewhat greater detail, it comprises a horizontal flat platform surface 152 bounded by lateral risers 154 and 156. A pair of handrails 158 and 160 are pivotally affixed at the corners defined between the surface 152 and the risers 154 and 156. The handrails 158 and 160 swing about a horizontal axis parallel to the defined corners of risers 154 and 156. Accordingly, movement is accommodated as indicated by the arrows 162 and 164 allowing the handrails to be lowered to stowage positions (indicated in broken lines) or raised to extend vertically as safety guards. While the handrails 158 are effective safeguards for persons in wheelchairs, they are also very significant for mobility-impaired standing passengers, for example such persons may be using a walking aid.

The outboard and inboard ends of the platform P with respect to the vehicle V (FIGURE 2) are terminated with a roll stop R and a bridge plate B which are actuated to provide a transition surface from the platform P either to ground level or to the vehicle floor. Different types of structures for the roll stop R and bridge plate B are practical in accordance herewith, however, specific embodiments are illustrated and explained below.

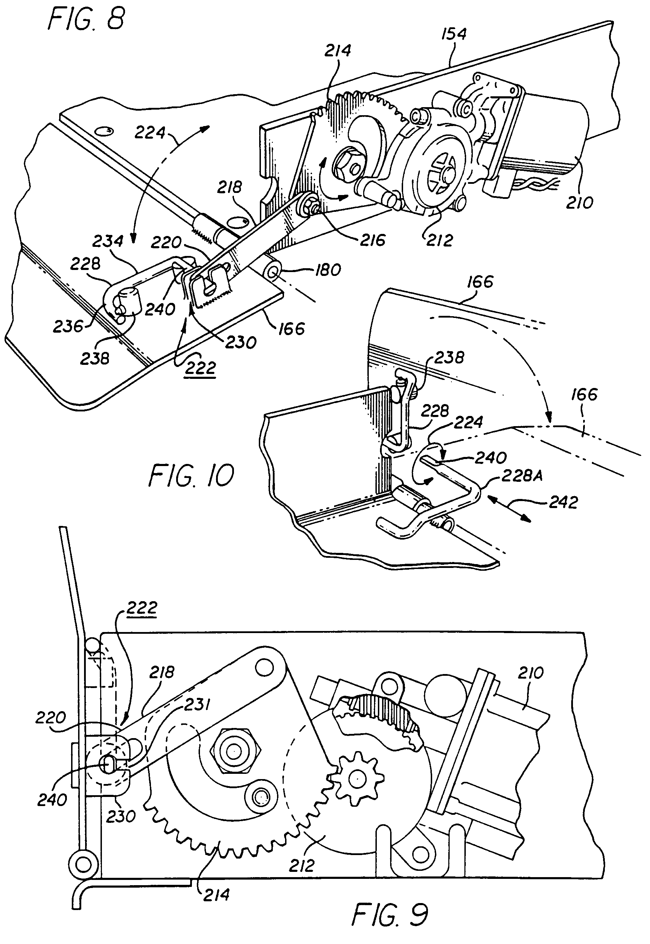

As shown at 166 (FIGURE 1) the roll stop R at the outboard end of the platform P, is activated when the platform P is at ground level to provide smooth transition from the surface 152 of the platform P to the ground. When the platform P is elevated from the ground, the roll stop R automatically pivots from a lowered ramp position to a raised or vertical safety stop position functioning to retain the wheelchair on the surface 152. Various details of the roll stop R are illustrated in FIGURES 8 through 12.

In the disclosed embodiment, the roll stop R is powered to be in the locked vertical mode when the platform P is not in contact with the ground. A latch mechanism supplements the powered operation to provide an electrical safeguard, i.e., the lift cannot be operated until the roll stop is raised to the vertical safety stop position.

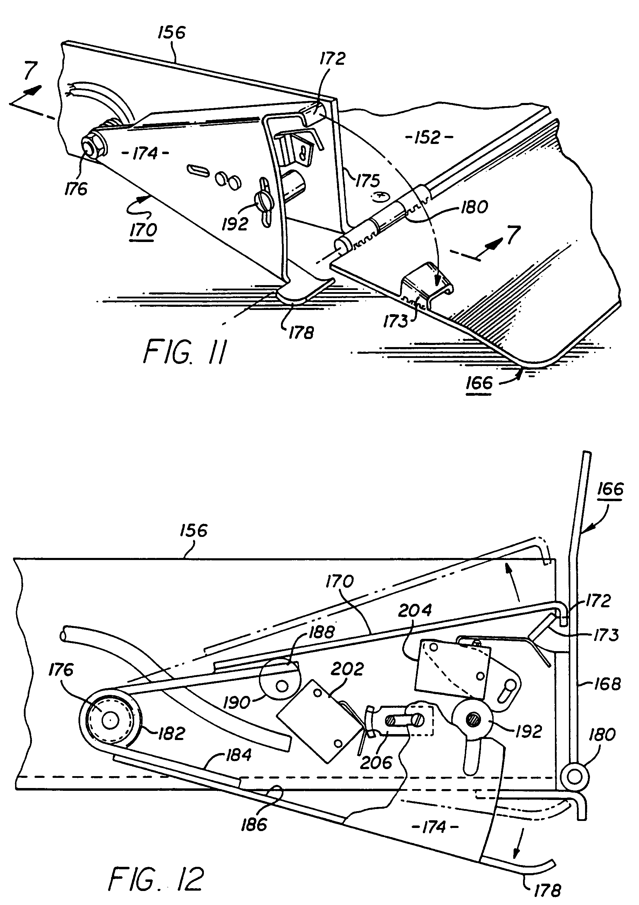

The roll stop R functions with the bridge plate B to provide a peripheral safety barrier to the platform surface 152. The bridge plate is mechanically activated by the motion of the elevating frame E and automatically provides a bridge between the platform P and the vehicle V. As described in detail below, it also functions as a vertical safety barrier at the inboard end of the platform P. Considering the roll stop R in greater detail, the roll stop 166 is powered by a motor-driven mechanism and supplemented by a latching mechanism (FIGURES 11 and 12). The power mechanism is fitted to one side of the roll stop 166 (FIGURES 8, 9 and 10) while the latch mechanism is fitted on the opposing side (FIGURES 11 and 12).

As illustrated in FIGURES 8 and 9, a motor 210 is coupled through a gear box 212 to a rotary quadrant gear 214 that also acts as a cam. The cam action of the quadrant gear 214 is by a pivot fastener 216 to reciprocate an arm 218. The opposed end 220 of the arm 218 (remote from the pivot fastener 216) terminates in a releasable pivot coupling 222.

Essentially, as the motor 210 turns the quadrant gear 214, the cam action of the gear 214 at the pivot fastener 216 reciprocates the arm 218 to open or close the roll stop 166 as indicated by an arrow 224. Note that the motor 210 is controlled by a switch 202 fitted in the latch mechanism (FIGURE 12) that selects the operating position of the roll stop 166 as described in greater detail below. However, possible malfunction of the mechanism could lock the roll stop 166 in the raised vertical position presenting a serious problem. Consequently, a release is provided.

The releasable coupling 222 (FIGURES 8 and 10) incorporates a levered release pin 228 fixed to extend through the end 220 of the arm 218 along with a guide structure 230. From a key end 240 (FIGURE 8) the pin 228 extends parallel to the hinges 180, then turns through an angle of ninety degrees to a lever section 234. The free end 236 of the lever section 234 is turned for snap lock engagement behind a post 238.

As indicated above, the need may arise to actuate the roll stop 166 when the motor 210, for one reason or another, is inoperative. Accordingly, the release pin 228 may be disengaged to release the end 220 of the arm 218 from the lock structure 230. The operation is illustrated in FIGURE 10. Essentially, the end 236 of the pin 228 is released from the post 238 with a slight flexure to move through an angle of approximately ninety degrees, allowing a key end 240 (FIGURES 9 and 10) to pass from the guide structure 230 accommodated by a slot 231 (FIGURE 9). In FIGURE 10, the pin 228A is illustrated withdrawn from locking engagement. Thus, the locking and unlocking movements of the pin 228 simply involve a rotary motion indicated by the arrow 224 (FIGURE 10) and a linear motion indicated by the arrow 242. With the pin 228 withdrawn, the roll stop 166 (FIGURE 10) can be freely moved to either a raised (vertical) or lowered (ramp) position. With replacement of the pin 228, the raise and store functions are restored.

Returning to consider the latch mechanism (FIGURES 11 and 12) the roll stop 166 is hinged to the surface 152 and extends the full width of the platform P. When elevated, the roll stop 166 is locked in the vertical position by a latch mechanism 170 (FIGURE 11). When the roll stop 166 is raised from the position illustrated in FIGURE 11 (somewhat horizontal) to a raised position (vertical), a trigger 172 extending from the latch mechanism 170 drops into locking engagement with a staple 173.

To consider the structure of the roll stop 166 in greater detail, the latch mechanism 170 (FIGURE 11) incorporates a triangular shaped housing 174 with an apex pivotally affixed to the riser 156 by a pivot bolt 176. From the pivot bolt 176, the housing 174 swings in a vertical plane whereby the trigger 172 may be engaged or disengaged with the staple 173 on the inside surface of the roll stop 166.

From the bottom of the housing 174, a ski 178 extends to engage the ground surface when the platform P is completely lowered. Such engagement lifts the housing 174, disengaging the trigger 172 from the staple 173 with the consequence that the roll stop 166 carried on hinges 180 is lowered by the power mechanism (FIGURES 8 and 9) to the illustrated ramp position (FIGURE 11). Thereafter, when the wheelchair is in the desired position (either loaded or offloaded) the action of elevating the platform P returns the roll stop to its raised and locked position.

The housing 174 is biased downwardly by a spring 182 anchored at a point 190 and coiled about the pivot 176. Specifically, a lower end 184 of the spring 182 engages the bottom side 186 of the housing 174. The overall sequence of operation now will be considered.

As the platform P drops to the lowered position, the ski 178 engages the ground and is raised against the force of the spring 182 to a position indicated in broken lines (FIGURE 12). Accordingly, the trigger 172 is withdrawn from the staple 173. As illustrated in FIGURE 12, the actions of the latch mechanism control the operation of the power unit as described below in accordance with the switches 202 and 204. The switches 202 and 204 are mounted within the housing 174 for actuation respectively by a cam 206 and the staple 173. The switch 204 indicates that the roll stop 166 is locked in the vertical stop position whereas the switch 202 indicates when the platform is at ground level. Further details of the operation involving the switches 202 and 204 are treated in the section below addressing the electromechanical lift operation. However, generally it is noteworthy that the switch 202 controls the bidirectional operation of the motor 210 and the switch 204 totally isolates the up-and-down platform motion until the roll stop 166 is latched in the vertical stop position.

Turning now to the bridge plate mechanism B (FIGURE 1) and its associated operation, a panel 211 is pivotally attached to the platform P by a cam bracket 213 actuated by a rotary mounted roller on a cross shaft 215 carried by a bracket 217 pivotally attached to the platform P. The bracket 217 is pivotally linked by a rod 219 to the arm 21 of the elevating frame E. A mirror image of these components is provided at the opposite end of the panel 211. The panel 211 is spring biased in the direction of the vehicle V maintaining contact between the roller 215 and its relative surface on the cam bracket 213. Accordingly, the vertical motion of the arm 20 acts through the rod 219 via the bracket 217 (cross shaft 215 and the bracket 213) to lower the panel 211 when the platform P is at vehicle floor level. At other times, the panel is held in a locked vertical position.

In the operating motion patterns of the lift, manual control is supplemented by electrical sensor switches. In addition to the switches explained above, other switches also indicate and control various other positions of the platform P. Such switches (FIGURES 13, 14 and 15) are carried on a plate 258 that is vertically fixed in the mounting frame 72 (FIGURE 2).

As the cross bar 38 is moved to actuate the parallelogram arrangement 20 (FIGURE 1), a link 260 (FIGURE 13, shown in cut-away) variously positions a linear cam 262. That is, when the cross bar 38 moves, as illustrated by FIGURES 14 and 15 to raise or lower the platform P, the link 260 variously positions the linear cam 262 to selectively close switches 264, 266, 268 and it opens 270.

The switch 270 is opened when the platform P attains the vehicle floor level position. The switch 268 is closed when the platform P approaches the stowage position. Functioning together, when the switch 268 is closed, the switches 264 and 266 set and maintain the platform P in the stowed position (travelling assembly T aligned, FIGURE 2). The functions of the switches in relation to the overall system operation is treated in detail below.

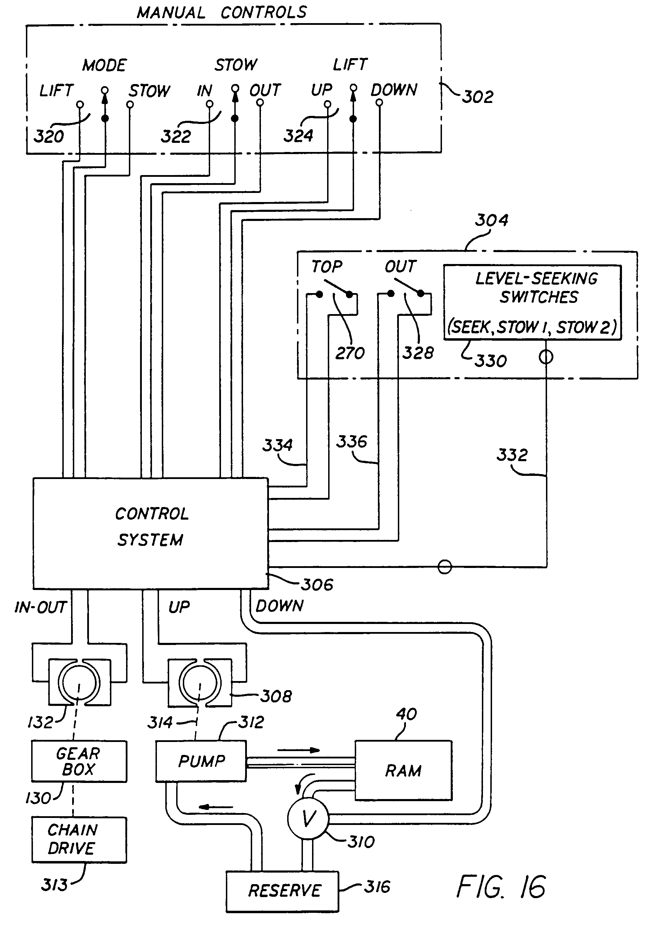

To consider the electrical-hydraulic system embodied in the lift of FIGURE 1, reference will now be made to FIGURE 16. Several of the schematically represented elements in FIGURE 16 have been previously described in relation to the mechanical components. Such elements carry the same reference numerals. Otherwise, several other of the elements indicated in FIGURE 16 are not apparent in the earlier drawings and have not been specifically mentioned.

Generally, the lift L provides a set of manual controls 302 along with a set of position switches 304, both of which are connected to a control system 306. Depending on the implementation of the electrical-hydraulic system, the control system 306 may be variously embodied; however, in one successful embodiment, the system 306 comprises relays utilizing a control logic implemented as will be described below. Accordingly, the control system 306 selectively energizes various components to accomplish the operations as desired at different times. Specifically, the control system 306 selectively energizes the "in-out" motor 132, an "up" motor 308 and a "down" release valve 310.

Recapitulating to some extent, the "in-out" motor 132 is mechanically coupled to the gear box 130 (FIGURE 4) which is in turn coupled to a chain drive 313 including chains 116 and 128. Accordingly, the motor 132 may be energized to revolve in either direction to move the travelling assembly T between deployed and stowed positions.

The "up" motor 308 (FIGURE 16 only) is mechanically coupled to a pump 312 as indicated by a dashed line 314. When the pump is actuated by the motor, the pump 312 draws hydraulic fluid from a reservoir or reserve 316, forcing the fluid to extend the ram 40. As a result, the platform is lifted. When the platform P is to be lowered, the pump 312 is de-energized and the valve 310 is opened. Accordingly, the fluid in ram 40 is released, allowing it to flow back to the reserve 316. As a result, the platform P is gravitationally lowered under its own weight or with a load. A flow valve selectively controls the rate of descent.

As indicated above, manual controls 302 selectively control the various desired operations. Specifically, a single pole, double throw, mode switch 320 may be actuated to either "lift" or "stow" positions. A momentary-contact form of an otherwise similar switch 322 is actuated during stowing operations to move the travelling assembly T between deployed and stowed positions. A similar switch 324 controls lifting operations to move the platform "up" or "down". Contact terminals of all the controls including the switches 320, 322 and 324 are connected to the control system 306.

The control operations are supplemented by the set 304 of position switches. These switches are actuated mechanically as a result of certain operating positions of the lift structure. Note that the alternative embodiment with a powered roll stop (FIGURES 8, 9, 10, 11 and 12) is not treated in relation to FIGURE 16 as it involves a change in circuitry.

When the platform P reaches the top of its path, a switch 270 is opened. Somewhat similarly, when travelling assembly T is fully out or deployed, a switch 328 is closed. A set 330 of switches (264, 266 and 268) are collectively represented as a block. The switch set 330 is connected to the control system 306 through a cable 332 while the switches 270 and 328 are connected to the system 306 through lines 334 and 336 respectively.

Generally, the logic of the control system 306 implements safe and effective manual operation of the lift. In that regard, power is supplied to the mode switch 320 for selecting the options of "lift" or "stow". In the "lift" mode, electrical current is routed to the "out" switch 328 and in the "stow" mode, current is directed to the level seeking switches 330.

For "lift" operation, the "lift" switch 324 is toggled right or left, causing the platform to move either "down" or "up", providing the "out" switch 328 is closed. Consequently, the platform may not be raised or lowered unless it is fully extended. So positioned, toggling the switch 324 to the "up" position raises the platform until the "top" switch 270 is opened. The "down" operation is enabled, simply by opening the valve 310.

When the mode switch 320 is in the "stow" position, the lift switch 324 is effective until the platform is positioned approximately at the stowage level. On that occurrence, the switch 268 (FIGURE 13) is closed and the manual switch 302 becomes ineffective. The level-seeking switches 264, 266 and 268, collectively represented as the switches 330 in FIGURE 16 assume control to align the travelling assembly T for stowage. Specifically, as the platform P approaches a position of alignment for stowage, the cam 262 (FIGURE 13) closes the switch 268 commanding a "seek" operation. The switches 264 and 266 then assume control, moving the platform P as appropriate until both of the switches 264 and 266 are closed. If the switch 264 is closed and the switch 266 is open, the platform will be moved, actuating the cam 262 to the left (as shown) until the switch 266 also is closed. Thus, the level seeking switches 330 (FIGURE 16) attain and maintain alignment of the travelling assembly T for stowage. A master switch may be provided for the lift to enable the level seeking switches 330 to accomplish alignment before any other action.

Returning to the "stow" mode of operation, with the platform P aligned in the configuration of the travelling assembly T, the stow switch 322 is rendered operative for commanding "in" and "out" movements. Essentially, with the travelling assembly T aligned, the switch 322 may be toggled to move the travelling unit into a stowage position or outward to a deployed position. When the travelling unit is out, the switch 328 is closed so that when switch 320 is in the lift mode, up down switch 324 is enabled. When the travelling assembly T is fully "in" or "out", the detent clutch 118 (FIGURE 4), yields sonically indicating the desired position has been attained. The motor 132 is bi-directional for actuating the chain drive 313 through the gear box 130 to move the travelling unit "in" and "out". The motor 308 actuates the pump 312 to extend the ram 40, lifting the platform P. Alternatively, with the pump 312 inactive, opening the valve 310 relieves the ram 40 so that the platform drops of its own weight as fluid is returned to the reserve 316.

In view of the above detailed descriptions, the structure of the exemplary embodiment as well as its operation, are deemed to be clearly explained. However, a cycle of operation will now be treated with selected reference to individual figures to summarize the overall performance. Accordingly, assume initially that the lift L is in a stowed position so that the platform P (FIGURE 1) is aligned with other components in the travelling assembly T (FIGURE 2). Also, the travelling assembly T is fully stowed in the mounting enclosure M (FIGURE 1) well within the vehicle V as indicated in dashed lines in FIGURE 1.

Further assume that the vehicle V is parked and it is desired to use the lift L for offloading an occupant in a wheelchair from the vehicle V. If a master switch (not shown) is provided, such a switch is closed to energize the electrical system. Immediately, the level seeking switches 330 (FIGURE 16) are activated to correct any misalignment in the travelling unit T that may have occurred during stowage. The operation is automatic as explained in detail above with reference to FIGURES 13, 14, 15 and 16. The motor 132 is bi-directional for actuating the chain drive 116 through the gear box 130 to move the travelling unit "in" and "out".

With the travelling assembly T aligned (FIGURE 2), the "stow" mode is selected by positioning the switch 320 (FIGURE 16). Next, the "stow" switch 322 is toggled to an "out" position, energizing the motor 132 to drive the gear box 130 (FIGURE 4), motivating the pinion gears 100 and 102 (FIGURES 4 and 5) to linearly travel on the racks 104 and 106 moving the travelling assembly T to a deployed position somewhat as illustrated in FIGURE 2. When the travelling assembly T is fully extended, the clutch 118 (FIGURE 4) audibly informs the operator to release the out switch, thereby de-energizing the motor 132.

The operator next places the mode switch 320 in the "lift" position. Toggling the lift switch 324 to the "up" position actuates the motor 308 and the pump 312 to drive the ram 40 (FIGURES 2 and 16). As the ram 40 extends, the cross bar 38 (FIGURES 2, 13, 14 and 15) moves in an arcuate pattern to raise the platform P to the elevated position as indicated in dashed lines in FIGURE 1. With the platform so elevated, the bridge plate B (FIGURE 1) inboard of the platform P is automatically lowered as illustrated in dashed lines.

The passenger in the vehicle V can now transfer to the platform P. Loaded, the lift switch 324 (FIGURE 16) is toggled to a "down" position prompting the control system 306 to open the valve 310. As a consequence, the ram 40 (FIGURES 2, 13, 14 and 15) is relieved allowing a controlled descent to ground level of the platform P as illustrated in FIGURE 1 by solid lines.

When the platform P attains the ground level position, the roll stop R lowers to the ramp position, as explained above, affording a smooth surface for transferring the wheelchair occupant from the platform P to the ground. To return the unloaded platform P to the stowage position, the mode switch 320 first is returned to the "stow" position. Next, the lift switch 324 is toggled to the "up" position again energizing the motor 308 actuating the pump 312 to extend the ram 40. Accordingly, as the platform P approaches stowage levels in the travelling assembly T, manual control is disabled with the level seeking switches 330 assuming control to align the travelling assembly T (FIGURE 2). With the travelling assembly T so aligned, the stow switch 322 is toggled to the "in" position actuating the motor 132 to return the travelling unit to a stowed location. The clutch 118 sonically informs the operator when the travelling unit T is fully stowed. Thus, the operating cycle is complete.

In view of the above descriptions along with the drawings, it will be apparent that the system of the present invention affords an improved lift as for use with a vehicle to effectively and safely board and disembark persons in wheelchairs. It will be also appreciated that the unit is convenient in relation to the operation of the vehicle and relatively economical. Of course, numerous modifications to the lift will be apparent to those skilled in the art, accordingly, the scope hereof shall be deemed appropriately resolved by reference to the claims as set forth below.

## Claims

1. A lift (L) adapted to be affixed to a vehicle (V) for movement of a load between raised and lowered positions comprising: a platform structure (P) for receiving the load to be moved between the raised and lowered positions; a carriage structure (C) pivotally coupled to said platform structure (P) to accommodate a range of pivotal motion (S) by said platform structure (P) which extends between said raised and lowered positions and which embraces a stowage position; a mounting enclosure (M) adapted to be affixed to said vehicle (V) and defining a space to receive at least part of said carriage structure (C) for stowage and with said platform structure in said stowage position; motive means (40, 308, 312) for driving said platform structure (P) in said pivotal range of motion (S); and control apparatus (302, 304, 306) for said motive means (40, 308, 312), characterised in that said control apparatus includes a sensor unit (304) which detects when the platform structure (P) is in said stowage position and which is operative during select intervals to actuate said motive means (40, 308, 312) to locate the platform structure (P) in said stowage position.

2. A lift according to claim 1 wherein said sensor unit (304) includes switch means (330, 264, 266, 268) mounted for actuation with movement of said platform structure (P).

3. A lift according to Claim 1 or claim 2 wherein said sensor unit (304) also detects when the platform structure (P) is in said raised and said lowered positions, and said control apparatus (302, 304, 306) includes manual means (302) for actuation to drive the platform structure (P) within its range of pivotal motion (S) to said stowage position.

4. A lift according to any one of Claims 1 to 3 wherein an elevating mechanism (E) affixing said platform structure (P) to said carriage structure (C) includes at least one parallelogram mechanism (20, 20A).

5. A lift according to Claim 4 wherein said parallelogram mechanism (20, 20A) includes an elongate channel (21) and an elongate rod (22) affixed to extend substantially parallel to one another between said platform structure (P) and said carriage structure (C), and wherein said channel (21) substantially encloses said rod (22).

6. A lift according to Claim 4 or Claim 5 wherein said elevating mechanism (E) includes a cross bar (38) affixed to extend between said parallelogram mechanism (20, 20A), and wherein said motive means (40) includes means for displacing said cross bar (38) to raise and lower said platform.

7. A lift according to any one of Claims 4 to 6 wherein said parallelogram mechanism (20, 20A) is arranged to tilt said platform structure (P) from the horizontal in the raised and lowered positions.

8. A lift according to any one of Claims 1 to 7 wherein roll stop apparatus (R) is affixed to said platform structure (P) at a location remote from said vehicle (V) and includes a roll stop member (166) movable between a ground operating-position in which it extends generally downwardly from said platform structure (P) and a barrier operating-position in which it extends generally upwardly from said platform structure (P), and roll stop drive means (210, 212, 216, 218, 222) for moving said roll stop member (166) to its said ground operating-position when said platform structure (P) is at ground level.

9. A lift according to Claim 8 wherein said roll stop apparatus (R) includes a latch mechanism (170) for locking said roll stop member (166) in its barrier operating-position.

10. A lift according to Claim 8 or Claim 9 wherein said roll stop apparatus (R) includes switch means (202) to select the operating position of the roll stop member (166).

11. A lift according to any one of Claims 8 to 10 wherein said roll stop apparatus (R) includes switch means (204) to isolate selected movement of said platform structure (P) unless the roll stop member (166) is in a selected one of its said operating-positions.

12. A lift according to any one of Claims 8 to 11 wherein said roll stop apparatus (R) includes a release mechanism (222) that is operable to disengage said roll stop drive means (210, 212, 216, 218, 222).

13. A lift according to any one of Claims 1 to 12 wherein said mounting enclosure (M) includes a pair of spaced-apart elongate guide rails (56, 58), and said carriage structure (C) includes cam followers (62, 64) for engaging said guide rails (56, 58) to facilitate movement of said carriage structure (C) with reference to said mounting enclosure (M).

14. A lift according to Claim 13 wherein said guide rail (56, 58) define an angle.

15. A lift according to Claim 13 or Claim 14 wherein said guide rails (56, 58) are curved such that said platform structure (P) changes its orientation to the ground as it moves in and out of said mounting structure (M).

16. A lift according to any one on Claims 13 to 15 wherein said mounting enclosure (M) includes a pair of spaced-apart channels (52, 54) in facing relationship to one another for mounting said guide rails (56, 58).

17. A lift according to any one of Claims 1 to 16 wherein said carriage structure (C) includes spaced-apart first gear means (100, 102) and said mounting enclosure (M) includes spaced-apart second gear means (104, 106) for mounting engagement with said first gear means (100, 102).

18. A lift according to Claim 17 wherein the first and second gear means comprise a pair of spaced-apart rack and pinion gears (100, 102, 104, 106) driven by said motive means (40, 308, 312).

19. A lift according to any one of Claims 1 to 18 including second motive means (132, 122, 126, 128, 94) for moving said carriage structure (C) in and out of said mounting enclosure (M).

20. A lift according to Claim 19 wherein manual control means (302) is connected to said control apparatus (306) for selectively energizing the first-mentioned motive means (40, 308, 312) and said second motive means (132).

## Patentansprüche

1. Lift (L) zur Befestigung an einem Fahrzeug (V), um eine Last zwischen einer gehobenen und einer gesenkten Position zu bewegen, umfassend: eine Plattformstruktur (P) zur Aufnahme der Last, die zwischen der gehobenen und der gesenkten Position bewegt werden soll; ein Tragwerk (C), das schwenkbar mit der genannten Plattformstruktur (P) gekoppelt ist, um einen Schwenkbewegungsbereich (S) der genannten Plattformstruktur (P) zu ermöglichen, der zwischen der genannten gehobenen und der genannten gesenkten Position verläuft und eine Verstauungsposition beinhaltet; ein Montagegehäuse (M), das an dein genannten Fahrzeug (V) befestigt wird und einen Raum zur Aufnahme von wenigstens einem Teil des genannten Tragwerks (C) zum Verstauen und mit der genannten Plattformstruktur in der genannten Verstauungsposition definiert; ein Antriebsmittel (40, 308, 312) zum Antreiben der genannten Plattformstruktur (P) in dem genannten Schwenkbewegungsbereich (S); und eine Steuervorrichtung (302, 304, 306) für das genannte Antriebsmittel (40, 408, 312), dadurch gekennzeichnet, daß die genannte Steuervorrichtung eine Sensoreinheit (304) beinhaltet, die erfaßt, wenn sich die Plattformstruktur (P) in der genannten Verstauungsposition befindet und die während gewählter Intervalle das genannte Antriebsmittel (40, 308, 312) so betätigt, daß die Plattformstruktur (P) in der genannten Verstauungsposition positioniert wird.

2. Lift nach Anspruch 1, bei dem der genannte Sensor (304) ein Schaltmittel (330, 264, 266, 268) aufweist, das so montiert ist, daß es zum Bewegen der genannten Plattformstruktur (P) betätigt werden kann.

3. Lift nach Anspruch 1 oder Anspruch 2, bei dem die genannte Sensoreinheit (304) ebenso erfaßt, wenn sich die Plattformstruktur (P) in der genannten gehobenen und in der genannten gesenkten Position befindet, und die genannte Steuervorrichtung (302, 304, 306) eine manuelle Vorrichtung (302) beinhaltet, die betätigt wird, um die Plattformstruktur (P) innerhalb ihres Schwenkbewegungsbereiches (S) in die genannte Verstauungsposition zu bewegen.

4. Lift nach einem der Ansprüche 1 bis 3, bei dem ein Hubmechanismus (E), der die genannte Plattformstruktur (P) an dem genannten Tragwerk (C) befestigt, wenigstens einen Parallelogramm-Mechanismus (20, 20A) beinhaltet.

5. Lift nach Anspruch 4, bei dem der genannte Parallelogramm-Mechanismus (20, 20A) einen länglichen Kanal (21) und eine längliche Stange (22) beinhaltet, die so befestigt sind, daß sie im wesentlichen parallel zueinander zwischen der genannten Plattformstruktur (P) und dem genannten Tragwerk (C) verlaufen, und bei dem der genannte Kanal (21) die genannte Stange (22) im wesentlichen umgibt.

6. Lift nach Anspruch 4 oder Anspruch 5, bei dem der genannte Hubmechanismus (E) einen Querstab (38) beinhaltet, der so befestigt ist, daß er zwischen dem genannten Parallelogramm-Mechanismus (20, 20A) verläuft, und bei dem das genannte Antriebsmittel (40) ein Mittel zum Verschieben des genannten Querstabes (38) beinhaltet, um die genannte Plattform zu heben und zu senken.

7. Lift nach einem der Ansprüche 4 bis 6, bei dem der genannte Parallelogramm-Mechanismus (20, 20A) so angeordnet ist, daß er die genannte Plattformstruktur (P) von der Horizontalen in die genannte gehobene und gesenkte Position kippt.

8. Lift nach einem der Ansprüche 1 bis 7, bei dem eine Rollanschlagvorrichtung (R) an der genannten Plattformstruktur (P) an einem Ort entfernt von dem genannten Fahrzeug (V) befestigt ist und ein Rollanschlagelement (166), das zwischen einer Bodenbetriebsposition, in der es von der genannten Plattformstruktur (P) allgemein abwärts verläuft, und einer Barrierenbetriebsposition, in der es von der genannten Plattformstruktur (P) allgemein aufwärts verläuft, beweglich ist, und ein Rollanschlag-Antriebsmittel (210, 212, 216, 218, 222) zum Bewegen des genannten Rollenanschlagelementes (166) in seine genannte Bodenbetriebsposition beinhaltet, wenn sich die genannte Plattformstruktur (P) auf Bodenhöhe befindet.

9. Lift nach Anspruch 8, bei dem die genannte Rollanschlagvorrichtung (R) einen Einrastmechanismus (170) zum Verriegeln des genannten Rollanschlagelementes (166) in seiner Barrierenbetriebsposition beinhaltet.

10. Lift nach Anspruch 8 oder Anspruch 9, bei dem die genannte Rollanschlagvorrichtung (R) ein Schaltmittel (202) beinhaltet, um die Betriebsposition des Rollanschlagelementes (166) zu wählen.

11. Lift nach einem der Ansprüche 8 bis 10, bei dem die genannte Rollanschlagvorrichtung (R) ein Schaltmittel (204) beinhaltet, um die gewählte Bewegung der genannten Plattformstruktur (P) zu isolieren, es sei denn, das Rollanschlagelement (166) befindet sich in einer gewählten seiner genannten Betriebspositionen.

12. Lift nach einem der Ansprüche 8 bis 11, bei dem die genannte Rollanschlagvorrichtung (R) einen Lösemechanismus (222) aufweist, der betätigt werden kann, um das genannte Rollanschlagantriebsmittel (210, 212, 216, 218, 222) auszukoppeln.

13. Lift nach einem der Ansprüche 1 bis 12, bei dem das genannte Montagegehäuse (M) ein Paar voneinander beabstandeter länglicher Führungsschienen (56, 58) beinhaltet und bei dem das genannte Tragwerk (C) Nockenmitnehmer (62, 64) für den Eingriff in die genannten Führungsschienen (56, 58) beinhaltet, um die Bewegung des genannten Tragwerks (C) in bezug auf das genannte Montagegehäuse (M) zu erleichtern.

14. Lift nach Anspruch 13, bei dem die genannte Führungsschiene (56, 58) einen Winkel definiert.

15. Lift nach Anspruch 13 oder Anspruch 14, bei dem die genannten Führungsschienen (56, 58) so gekrümmt sind, daß die genannte Plattformstruktur (P) ihre Orientierung während ihrer Bewegung in die und aus der genannte(n) Montagestruktur (M) ändert.

16. Lift nach einem der Ansprüche 13 bis 15, bei dem das genannte Montagegehäuse (M) ein Paar voneinander beabstandeter Kanäle (52, 54) in einander zugewandter Beziehung für die Montage der genannten Führungsschienen (56, 58) beinhaltet.

17. Lift nach einem der Ansprüche 1 bis 16, bei dem das genannte Tragwerk (C) eine beabstandete erste Zahnradbaugruppe (100, 102) beinhaltet, und bei dem das genannte Montagegehäuse (M) eine beabstandete zweite Zahnradbaugruppe (104, 106) für einen Montageeingriff in die genannte erste Zahnradbaugruppe (100, 102) beinhaltet.

18. Lift nach Anspruch 17, bei dem die erste und die zweite Zahnradbaugruppe ein Paar beabstandeter Zahnstangen (100, 102, 104, 106) umfassen, die von dem genannten Antriebsmittel (40, 308, 312) angetrieben werden.

19. Lift nach einem der Ansprüche 1 bis 18, umfassend ein zweites Antriebsmittel (132, 122, 126, 128, 94) zum Bewegen des genannten Tragwerks (C) in das und aus dem genannte(n) Montagegehäuse.

20. Lift nach Anspruch 19, bei dem das manuelle Steuermittel (302) mit der genannten Steuervorrichtung (306) verbunden ist, um das erstgenannte Antriebsmittel (40, 308, 312) und das genannte zweite Antriebsmittel (132) selektiv zu aktivieren.

## Revendications

1. Un appareil de levage (L) adapté pour être attaché à un véhicule (V) pour le déplacement d'une charge entre une position relevée et une position abaissée, comportant: une structure en plate-forme (P) pour la réception de la charge à déplacer entre les positions relevée et abaissée; un chariot (C) couplé par pivot à ladite plate-forme (P) pour accommoder une plage de mouvements de rotation (S) par ladite plate-forme (P) qui se prolonge entre les dites positions relevée et abaissée et qui comporte une position d'arrimage; une enceinte de montage (M) adaptée pour être attachée au dit véhicule (V) et définissant un espace pour recevoir au minimum une partie du dit chariot (C) pour l'arrimage et avec ladite plate-forme en position d'arrimage comme indiqué; un moyen moteur (40, 308, 312) pour mouvoir ladite plate-forme (P) dans ladite plage de mouvements de rotation (S); et un appareil de commande (302, 304, 306) pour ledit moyen moteur (40, 308, 312), caractérisé en ce que ledit appareil de commande inclut un dispositif détecteur (304) qui détecte lorsque la structure (P) est dans ladite position d'arrimage et qui est opérant durant des intervalles sélectionnés pour actionner ledit moyen moteur (40, 308, 312) pour amener la plate-forme (P) dans ladite position d'arrimage.

2. Un appareil de levage selon la Revendication 1, dans lequel ledit moyen de détection (304) inclut un moyen de commutation (330, 264, 266, 268) monté pour l'actionnement conjointement avec le mouvement de ladite plate-forme (P).

3. Un appareil de levage selon les Revendications 1 ou 2 dans lequel ledit dispositif de détection (304) détecte également lorsque la plate-forme (P) est dans les dites positions relevée et abaissée et ledit appareil de commande (302, 304, 306) inclut un moyen manuel (302) de commande pour piloter la plate-forme (P) dans sa plage de mouvements de rotation (S) jusqu'à ladite position d'arrimage.

4. Un appareil de levage selon l'une quelconque des Revendications 1 à 3 dans lequel un mécanisme élévateur (E) qui rattache ladite plate-forme (P) au dit chariot (C) inclut au moins un mécanisme en parallélogramme (20, 20A).

5. Un appareil de levage selon la Revendication 4 dans lequel ledit mécanisme en parallélogramme (20, 20A) inclut un profilé en U allongé (21) et une bielle allongée (22) fixés de manière à se prolonger substantiellement parallèlement l'un à l'autre entre ladite plate-forme (P) et ledit chariot (C), et dans lequel ledit profilé en U (21) renferme substantiellement ladite bielle (22).

6. Un appareil de levage selon la Revendication 4 ou la Revendication 5, dans lequel ledit mécanisme élévateur (E) inclut une barre transversale (38) rattachée de manière à s'étendre entre ledit mécanisme en parallélogramme (20, 20A), et dans lequel ledit moyen moteur (40) inclut un moyen de déplacement de ladite barre transversale (38) pour relever et abaisser ladite plate-forme.

7. Un appareil de levage selon l'une quelconque des Revendications 4 à 6, dans lequel ledit mécanisme en parallélogramme (20, 20A) est configuré de manière à incliner ladite plate-forme (P) à partir de l'horizontale vers les positions relevée et abaissée.

8. Un appareil de levage selon l'une quelconque des Revendications 1 à 7, dans lequel un appareil stabilisateur (R) est rattaché à ladite plate-forme (P) en un endroit distant du dit véhicule (V) et inclut un élément stabilisateur (166) qui peut se déplacer entre une position de fonctionnement au sol dans laquelle il se prolonge généralement vers le bas à partir de ladite plate-forme (P) et une position de fonctionnement en barrière dans laquelle il se prolonge généralement vers le haut à partir de ladite plate-forme (P), et un moyen de commande du stabilisateur (210, 212, 216, 218, 222) pour déplacer ledit élément stabilisateur (166) jusqu'à sa dite position de fonctionnement au sol lorsque ladite plate-forme (P) est au niveau du sol.

9. Un appareil de levage selon la Revendication 8, dans lequel ledit appareil stabilisateur (R) inclut un mécanisme de verrouillage (170) pour le verrouillage du dit élément stabilisateur (166) en sa position de fonctionnement en barrière.

10. Un appareil de levage selon la Revendication 8 ou la Revendication 9, dans lequel ledit appareil stabilisateur (R) inclut un moyen de commutation (202) pour sélectionner la position de fonctionnement de l'élément stabilisateur (166).

11. Un appareil de levage selon l'une quelconque des Revendications 8 à 10, dans lequel ledit appareil stabilisateur (R) inclut un moyen de commutation (204) pour isoler un mouvement sélectionné de ladite plate-forme (P) sauf si l'élément stabilisateur (166) se trouve dans une position sélectionnée parmi ses positions de fonctionnement précitées.

12. Un appareil de levage selon l'une quelconque des Revendications 8 à 11, dans lequel ledit appareil stabilisateur (R) inclut un mécanisme de déclenchement (222) qui peut être actionné pour débrayer ledit moyen de commande de stabilisateur (210, 212, 216, 218, 222).

13. Un appareil de levage selon l'une quelconque des Revendications 1 à 12, dans lequel ladite enceinte de montage (M) inclut une paire de rails de guidage allongés espacés (56, 58), et ledit chariot (C) inclut des contre-cames (62, 64) pour mettre en prise les dits rails de guidage (56, 58) pour faciliter le mouvement du dit chariot (C) relativement à ladite enceinte de montage (M).

14. Un appareil de levage selon la Revendication 13, dans lequel les dits rails de guidage (56, 58) définissent un angle.

15. Un appareil de levage selon la Revendication 13 ou la Revendication 14, dans lequel les dits rails de guidage (56, 58) sont incurvés de manière à ce que ladite plate-forme (P) change son orientation par rapport au sol lorsqu'elle se déplace vers l'intérieur et l'extérieur de ladite structure de montage (M).

16. Un appareil de levage selon l'une quelconque des Revendications 13 à 15, dans lequel ladite enceinte de montage (M) inclut une paire de profilés en U espacés (52, 54) face l'un à l'autre, pour le montage des dits rails de guidage (56, 58).

17. Un appareil de levage selon l'une quelconque des Revendications 1 à 16, dans lequel ledit chariot (C) inclut des premiers engrenages espacés (100, 102) et ladite enceinte de montage (M) inclut des seconds engrenages espacés (104, 106) pour l'engrènement du montage avec les' dits premiers engrenages (100, 102).

18. Un appareil de levage selon la Revendication 17, dans lequel le premier et le second engrenages comprennent une paire d'engrenages espacés à pignon et crémaillère (100, 102, 104, 106) menés par ledit moyen moteur (40, 308, 312).

19. Un appareil de levage selon l'une quelconque des Revendications 1 à 18, comportant un second moyen moteur (132, 122, 126, 128, 94) pour déplacer ledit chariot (C) vers l'intérieur et vers l'extérieur de ladite enceinte de montage (M).

20. Un appareil de levage selon la Revendication 19, dans lequel un moyen de commande manuelle (302) est raccordé au dit appareil de commande (306) pour l'excitation sélective du moyen moteur mentionné en premier (40, 308, 312) et du dit second moyen moteur (132).
